# EUROPÄISCHE PATENTSCHRIFT

(11) **EP 4 438 360 B1**
(45) Veröffentlichungstag und Bekanntmachung des Hinweises auf die Patenterteilung: **29.04.2026**
(21) Anmeldenummer: 24164067.1
(22) Anmeldetag: 18.03.2024
(51) Int. Cl.: B60J 11/04, A01F 25/13

(54) **ABDECKSYSTEM UND VERFAHREN ZUM AUFLEGEN AUF UND ABNEHMEN VON EINEM ABZUDECKENDEN OBJEKT**
COVERING SYSTEM AND METHOD FOR PLACING ON AND REMOVING AN OBJECT TO BE COVERED
SYSTÈME DE RECOUVREMENT ET PROCÉDÉ POUR APPLIQUER SUR ET ENLEVER UN OBJET DEVANT ÊTRE RECOUVERT

(30) Priorität: 20.03.2023 DE 202023101389 U
(43) Veröffentlichungstag der Anmeldung: 02.10.2024
(73) Patentinhaber: Reichert, Werner F., 93049 Regensburg (DE)
(72) Erfinder: Schambeck, Josef-Michael, 94365 Parkstetten (DE); Reichert, Werner F., 93049 Regensburg (DE)
(74) Vertreter: Reichert & Lindner Partnerschaft Patentanwälte

(56) Entgegenhaltungen:
- CN-A- 110 789 320
- DE-U1- 202022 101 821
- US-A1- 2014 312 647

## Beschreibung

Die Erfindung betrifft ein Abdecksystem.

Ferner betrifft die Erfindung ein Verfahren zum Auflegen auf und zum Abnehmen von einem abzudeckenden Objekt.

Das deutsche Patent DE 10 2014 213 754 B3 betrifft eine Spannvorrichtung für eine Mehrzweckabdeckplane. Die Spannvorrichtung wird einerseits mittels einer Öse an der Mehrzweckabdeckplane eingehängt und andererseits über ein Einschlagteil an einem Holzscheit befestigt.

Das deutsche Gebrauchsmuster DE 20 2006 000 265 U1 umfasst ein Abdecksystem mit einer im Randbereich verstärkten Abdeckeinheit. Die Längsseiten der Abdeckeinheit sind verstärkt. Die Abdeckeinheit ist 1,0 m bis 1,5 m, insbesondere 1,2 m oder 1,3 m breit. Die Abdeckeinheit hat ein Gewicht von 250 g/m2 und ist UV-beständig, wasserdicht und abwaschbar. Das Abdecksystem ist mit einer elastischen Halterung versehen.

Das deutsche Gebrauchsmuster DE 20 2012 010 915 U1 betrifft ein System zur Abdeckung eines quaderförmig gestapelten Holzstoßes. Die Abdeckung umfasst mindestens ein dünnes, plattenartiges, quer zum Holzstoß gewölbtes Bauteil. An dem gewölbten Bauteil ist an seinen vor und hinter dem Holzstoß verlaufenden Kanten jeweils ein annähernd senkrecht verlaufender Randstreifen vorgesehen, der über bandartige Befestigungselemente mit dem Holzstoß verbindbar ist.

Das Dokument CN 110 789 320 A offenbart einen tragbaren Autounterstand und gehört zum Bereich der Sonnenschutzprodukte für Autos. Die Rippenstreifen bestehen aus mehreren parallel angeordneten, biegsamen und elastischen geraden Streifen, die in Querrichtung unterhalb des Unterstandes befestigt sind. Bei Verwendung der dünnen Rippenstreifen muss zusätzlich eine Stützsäule angebracht werden, die die Rippenstreifen und den Unterstand stützt, sodass zwischen dem Unterstand und dem Dach des Autos ein Spalt entsteht.

Die US-Patentanmeldung US 2014/312647 offenbart eine langlebige, wetterbeständige und leichte Vorrichtung zum Abdecken eines Fahrzeugs und zum Schutz vor Objekten, die auf die Außenflächen des Fahrzeugs treffen und diese beschädigen könnten. Die Fahrzeugabdeckung kann von einer einzelnen Person ausgeklappt werden.

In zunehmendem Maße wird Holz als Brenn- bzw. Heizmaterial benutzt. Das zu Scheiten mit einer Länge von etwa 1,0 m zugeschnittene Holz muss vor seiner Verbrennung über einen längeren Zeitraum getrocknet werden. Für dieses Trocknen wird das geschnittene Holz zu einem quaderförmigen Holzstoß gestapelt, der dann zum Schutz gegen Regen und Schnee mit mindestens einer, beispielsweise folienartigen, Plane abgedeckt wird. Um die Lage einer solchen Abdeckplane auf dem Holzstoß zu sichern, werden auf den Holzstoß zurückgehaltene Holzscheite gelegt, die jedoch ihrerseits immer, insbesondere, Regen und Schnee ausgesetzt sind. Da die auf dem Markt erhältlichen Abdeckplanen keine, für einen solchen Zweck, nutzbare Größe aufweisen, hängt die Abdeckplane meist vorne und hinten um ein nicht unbeträchtliches Maß herab, was die Durchlüftung und damit die Trocknung des Holzstoßes beeinträchtigt. Vielfach wird auch eine zu breite Abdeckplane an ihren Seiten eingeschlagen und zwischen den Holzscheiten festgeklemmt. Dies wirkt sich allerdings ebenfalls auf die Trocknung des Holzes nachteilig aus. Darüber hinaus besteht bei einer derartigen Abdeckung eines Holzstoßes immer die Gefahr, dass es bei Sturm, insbesondere bei starken Windböen, zu Beschädigungen und Verwehungen der Abdeckplane kommen kann. Es kommt schließlich auch noch hinzu, dass das Aufbringen und Sichern der Abdeckplane auf den Holzstoß verhältnismäßig mühsam und zeitraubend ist. Darüber hinaus ist nicht auszuschließen, dass die verwendete folienartige Abdeckplane durch äußere Einwirkungen reißen kann. Die Durchlüftung des Holzstoßes ist, insbesondere in seinem oberen Bereich, unbefriedigend.

Aufgabe der Erfindung ist, ein Abdecksystem bereitzustellen, das zuverlässig und einfach von einer Person auf dem abzudeckenden Objekt aufgebracht und einfach abgenommen, transportiert und aufbewahrt werden kann.

Diese Aufgabe wird durch ein Abdecksystem gelöst, das die Merkmale des Schutzanspruchs 1 umfasst.

Eine weitere Aufgabe der Erfindung ist, ein Verfahren zum Auflegen auf und zum Abnehmen eines Abdecksystems von einem abzudeckenden Objekt zu schaffen, dass von einer einzigen Person, unabhängig von den Witterungsbedingungen, schnell, einfach und effektiv durchgeführt werden kann.

Diese Aufgabe wird durch ein Verfahren gelöst, das die Merkmale des Anspruchs 6 umfasst.

Gemäß einer Ausführungsform zeichnet sich das Abdecksystem derart aus, dass es eine Plane umfasst, die eine Innenfläche und eine Außenfläche definiert. Die Plane besitzt jeweils ein Stabilisierungselement, das an jedem Ende der Plane mit dieser verbunden ist. Ferner weist dies mindestens ein weiteres Stabilisierungselement auf, das zwischen den beiden Enden der Plane vorgesehen ist. Es ist mindestens eine Aufnahme für jedes Stabilisierungselement und jedes weitere Stabilisierungselement vorgesehen, dass jeweils an einer Innenfläche der Plane angebracht ist. Mindestens zwei Sicherungselemente sind mit jedem in der Aufnahme sitzenden Stabilisierungselement und jedem weiteren in der Aufnahme sitzenden Stabilisierungselement verbunden. Über die Sicherungselemente kann das Abdecksystem am abzudeckenden Objekt gesichert werden. Im Falle eines Holzstoßes sind das z.B. Schrauben und/oder Gewichte, die in entsprechende Ösen der Sicherungselemente eingehängt werden können.

Der Vorteil des Abdecksystems ist, dass alle Elemente, die für eine Sicherung vor Wind oder dergleichen notwendig sind, am Abdecksystem derart angebracht sind, dass ein Verlieren dieser Elemente verhindert wird. Ferner kann das Abdecksystem am abzudeckenden Objekt einfach ausgerichtet werden. Hinzu kommt, dass das Abdecksystem einfach angebracht und abgenommen und sicher transportiert und aufbewahrt werden kann.

Gemäß einer vorteilhaften Ausführungsform des Abdecksystems sitzen die Stabilisierungselemente an den Enden der Plane und das mindestens eine weitere Stabilisierungselement an der Innenfläche der Plane, jeweils in mehreren einzelnen Aufnahmen. Die an der Innenfläche der Plane angebrachten Aufnahmen und die weiteren Aufnahmen bestehen aus dem gleichen Material wie die Plane.

Die Aufnahmen haben den Vorteil, dass die Sicherungselemente darin geschützt und zuverlässig gehaltert sind.

Ein Tragegriff ist an dem weiteren Stabilisierungselement derart angebracht, dass er von der Innenfläche der Plane weggerichtet ist.

Gemäß einer vorteilhaften Ausgestaltung der Erfindung hat das Sicherungselement an einem freien Ende eine einzige Öse ausgebildet. Durch diese Öse kann das Sicherungselement am Stabilisierungselement bzw. am weiteren Stabilisierungselement befestigt werden. Das Sicherungselement hat am gegenüberliegenden freien Ende mehrere Ösen ausgebildet, mittels denen die Plane am abzudeckenden Objekt gesichert ist.

Vorteil der mehreren Ösen am Sicherungselement ist, dass die Befestigung bzw. Sicherung der Sicherungselemente am abzudeckenden Objekt variable ist.

Gemäß einer weiteren Ausführungsform kann das Abdecksystem einen Tragegriff aufweisen, der an dem weiteren Stabilisierungselement zwischen den beiden Stabilisierungselementen am Ende der Plane angebracht ist. Der Tragegriff hat den Vorteil, dass die aufgerollte Plane bzw. das aufgerollte Abdecksystem einfach und sicher transportiert werden kann. In einer Ausführungsform umschließt ein Sicherungsriemen das aufgerollte Abdecksystem und sichert dieses somit.

Für den Fall, dass das abzudeckende Objekt ein Holzstoß ist, können die Sicherungselemente lösbar mit mindestens einem Holzscheit des Holzstoßes verbunden werden. Die Sicherungselemente können z.B. mittels Schrauben an den Holzscheiten des Holzstoßes befestigt werden.

Das erfindungsgemäße Verfahren zum Auflegen auf und zum Abnehmen eines Abdecksystems von einem abzudeckenden Objekt umfasst im Wesentlichen eine Plane mit einer Innenfläche und eine Außenfläche. Jeweils ein Stabilisierungselement ist an jedem Ende der Plane und mindestens ein weiteres Stabilisierungselement ist zwischen den beiden Enden der Plane an der Innenfläche der Plane vorgesehen. Ein Tragegriff ist mindestens an einem des mindestens einen weiteren Stabilisierungselement derart angebracht, dass er von der Innenfläche der Plane weggerichtet ist.

Das Verfahren zeichnet sich durch die folgenden Schritte aus:
Die zusammengerollte Plane wird in etwas in die Mitte des abzudeckenden Objekts gelegt, wobei der Tragegriff zum abzudeckenden Objekt hingerichtet ist. Anschließend wird ein Sicherungsband der zusammengerollten Plane gelöst. Ebenso wäre es denkbar, dass das Sicherungsband vor dem Auflegen auf das Objekt geöst wird.

Die zusammengerollte Plane kann mit dem Stabilisierungselement an jedem der Enden der Plane, beidseitig, auf dem Objekt aufgerollt werden.

Für das Aufrollen bzw. das Verbringen des Abdecksystems in die Transportstellung können die beiden Stabilisierungselemente der Plane zu dem weiteren Stabilisierungselement hin zusammengerollt werden.

Die zusammengerollte Plane wird gewendet, dass der Tragegriff am weiteren Stabilisierungselement nach oben weist.

Mit dem Sicherungsband wird am mittleren Stabilisierungselement die zusammengerollte Plane mit einem entsprechenden Verschluss gesichert.

Anhand der beigefügten Zeichnungen werden nun die Erfindung und ihre Vorteile durch Ausführungsbeispiele näher erläutert, ohne dadurch die Erfindung auf das gezeigte Ausführungsbeispiel zu beschränken. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
**Figur 1** zeigt eine Draufsicht auf eine mögliche Ausführungsform des erfindungsgemäßen Abdecksystems.
**Figur 2** zeigt eine Seitenansicht eines Teils einer möglichen Ausführungsform des erfindungsgemäßen Abdecksystems des in Fig. 1 mit A gekennzeichneten Bereichs.
**Figur 3** zeigt eine Frontansicht auf den in Fig. 1 mit B gekennzeichneten Bereich einer anderen Ausführungsform des erfindungsgemäßen Abdecksystems.
**Figur 4** zeigt eine Draufsicht auf die Unterseite des erfindungsgemäßen Abdecksystems.
**Figur 5** zeigt eine Seitenansicht einer möglichen Ausführungsform des Sicherungselements.
**Figur 6** zeigt eine Draufsicht auf eine Ausführungsform des Sicherungselements aus Fig. 5.
**Figur 7** zeigt eine Detailansicht des in Fig. 3 mit C gekennzeichneten Bereichs.
**Figur 8** zeigt eine Draufsicht auf eine weitere Ausführungsform des Sicherungselements.
**Figur 9** zeigt eine Seitenansicht eines Holzstoßes, der mit einer Ausführungsform des erfindungsgemäßen Abdecksystems abgedeckt und geschützt ist.
**Figur 10** zeigt eine Seitenansicht eines Holzstoßes, der mit zwei Ausführungsformen des erfindungsgemäßen Abdecksystems abgedeckt und geschützt ist.
**Figur 11** zeigt eine Seitenansicht eines Wohnanhängers, der mit einer Ausführungsform des erfindungsgemäßen Abdecksystems abgedeckt und geschützt ist.
**Figur 12** zeigt eine Seitenansicht eines Anhängers, der mit einer Ausführungsform des erfindungsgemäßen Abdecksystems abgedeckt und geschützt ist.
**Figur 13** zeigt das Abdecksystem in einer ersten Ausführungsform der Transportstellung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die Figuren stellen lediglich Ausführungsbeispiele der Erfindung dar, ohne jedoch die Erfindung auf die dargestellten Ausführungsbeispiele zu beschränken.

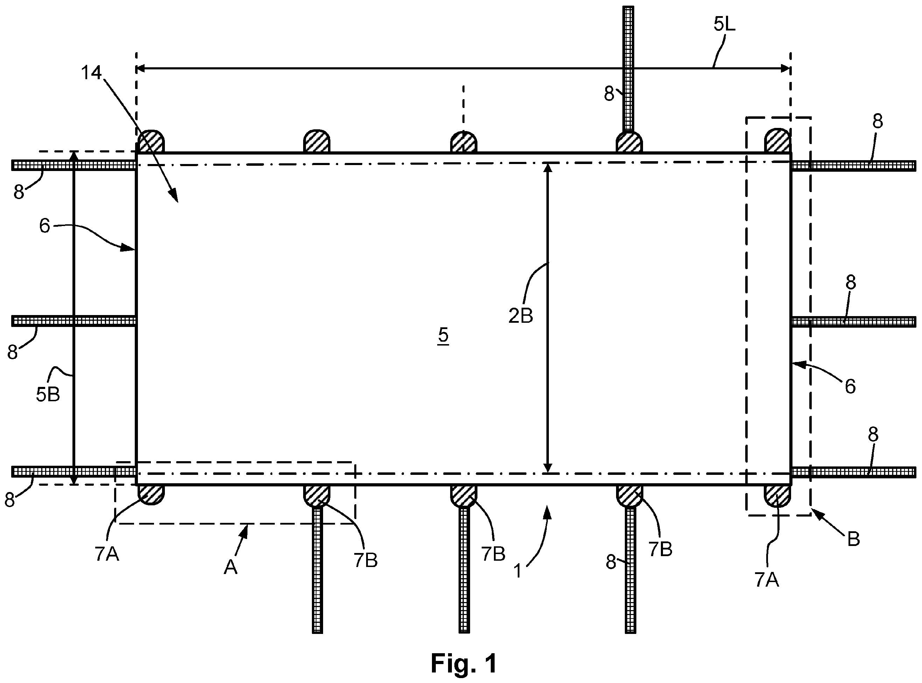

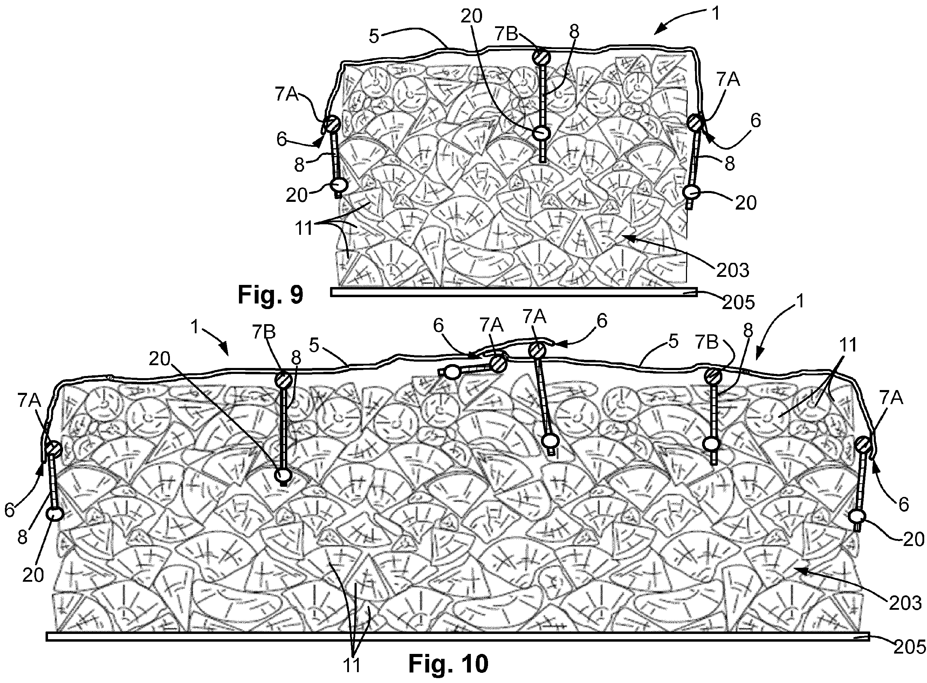

**Figur 1** zeigt eine Draufsicht auf eine Außenfläche 14 einer möglichen Ausführungsform des erfindungsgemäßen Abdecksystems 1. Das Abdecksystem 1 weist eine Breite 5B auf, die größer ist als eine Breite 2B (gekennzeichnet durch die gestrichelt gepunkteten Linien in Fig. 1) des quaderförmigen Holzstoßes 203 (siehe Fig. 9). Ebenso besitzt das Abdecksystem 1 eine Länge 5L. Die Plane 5 trägt zumindest am jeweiligen Ende 6 ein Stabilisierungselement 7A und zwischen den beiden Enden 6 der Plane 5 mindestens ein weiteres Stabilisierungselement 7B. Die Stabilisierungselemente 7A an den beiden Enden 6 der Plane 5 sind mit mindestens zwei Sicherungselementen 8 versehen. Das mindestens eine weitere Stabilisierungselement 7B, zwischen den beiden Enden 6 der Plane 5, besitzt zwei Sicherungselemente 8. Bevorzugt sind die Stabilisierungselemente 7A und 7B als (im Querschnitt) rechteckförmige Profile ausgebildet. Weitere mögliche Formen der Stabilisierungselemente 7A und 7B können als (im Querschnitt) runde oder ovale Profile ausgebildet sein. Die Sicherungselemente 8 können als Bänder, Gewebebänder, Riemen, etc. ausgebildet sein.

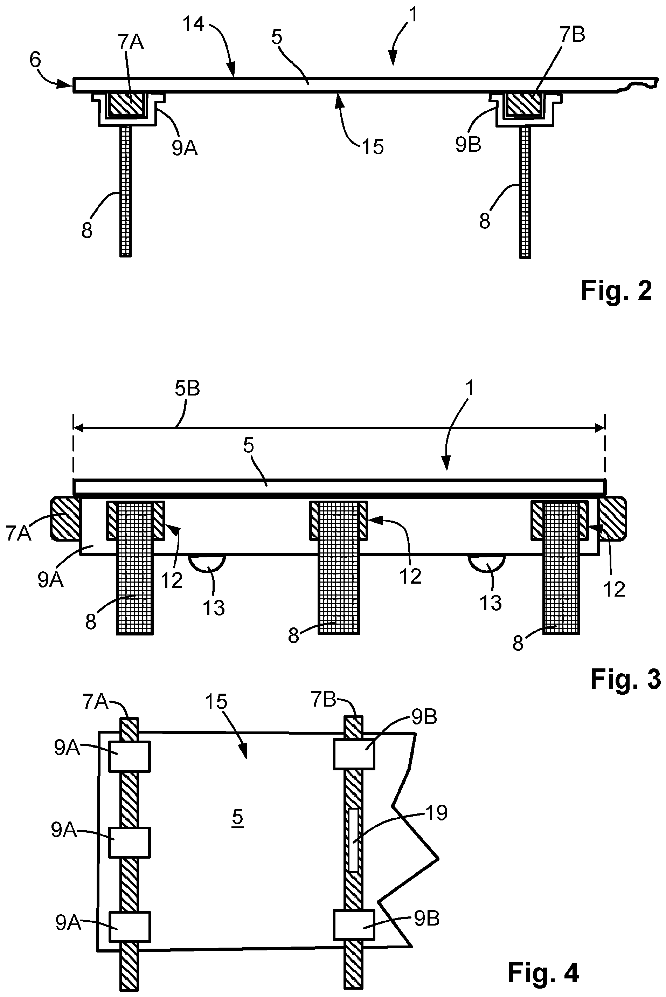

**Figur 2** zeigt eine Seitenansicht auf den in Fig. 1 mit A gekennzeichneten Bereich des erfindungsgemäßen Abdecksystems 1. Die Plane 5 des Abdecksystems 1 definiert eine Außenfläche 14 und eine Innenfläche 15. Zum Sitz und der Lokalisation der Stabilisierungselemente 7A und der weiteren Stabilisierungselemente 7B sind an der Innenfläche 15 der Plane 5 Aufnahmen 9A und entsprechend weitere Aufnahmen 9B ausgebildet, die sich im Wesentlichen entlang der Breite 5B (siehe Fig. 1 bzw. Fig. 3) erstrecken. Bevorzugt bestehen die Aufnahmen 9A und die weiteren Aufnahmen 9B aus dem gleichen Material wie die Plane 5, und sind mit der Innenfläche 15 der Plane 5 verklebt oder verschweißt. Bei der hier dargestellten Ausführungsform besitzen die Stabilisierungselemente 7A und die weiteren Stabilisierungselemente 7B einen rechteckigen Querschnitt.

**Figur 3** zeigt eine Frontansicht auf den in Fig. 1 mit B gekennzeichneten Bereich einer möglichen Ausführungsform des erfindungsgemäßen Abdecksystems 1. In der Aufnahme 9A, die als eine einzige durchgehende Aufnahme 9A oder weitere Aufnahme 9B ausgebildet ist, ist das Stabilisierungselement 7A bzw. das weitere Stabilisierungselement 7B geführt und festgelegt. Die Festlegung des Stabilisierungselements 7A bzw. des weiteren Stabilisierungselements 7B an der Plane 5 wird durch mindestens zwei Befestigungselemente 13 erreicht. Das Stabilisierungselement 7A und die Aufnahme 9 A erstrecken sich entlang der Breite 5B der Plane 5. Damit die durch das Stabilisierungselement 7A gehalterten Sicherungselemente 8 für den Benutzer zur Sicherung der Plane 5 zugänglich sind, hat die Aufnahme 9 entsprechend der Anzahl der Sicherungselemente 8 Freisparungen 12 ausgeformt. Es ist für einen Fachmann selbstverständlich, dass die Anzahl der Sicherungselemente 8 pro Stabilisierungselement 7A nicht als Beschränkung der Erfindung aufgefasst werden soll.

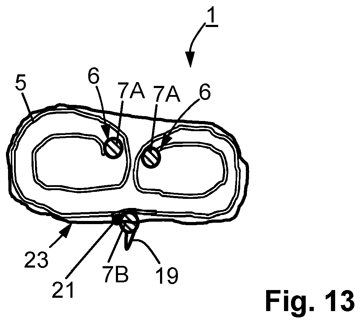

**Figur 4** zeigt eine Draufsicht auf die Innenfläche 15 einer möglichen Ausführungsform des erfindungsgemäßen Abdecksystems 1. Die Stabilisierungselemente 7A und die weiteren Stabilisierungselemente 7B sind über mehrere Aufnahme 9A und weitere Aufnahmen 9B an der Innenfläche 15 gehaltert. Ferner ist das weitere Stabilisierungselement 7B, das in der Mitte zwischen den Stabilisierungselementen 7A vorgesehen ist, mit einem Tragegriff 19 versehen. Der Tragegriff 19 dient z.B. zum Transport des Abdecksystems 1, wenn dieses in eine Transportstellung (siehe Fig. 13) verbracht worden ist.

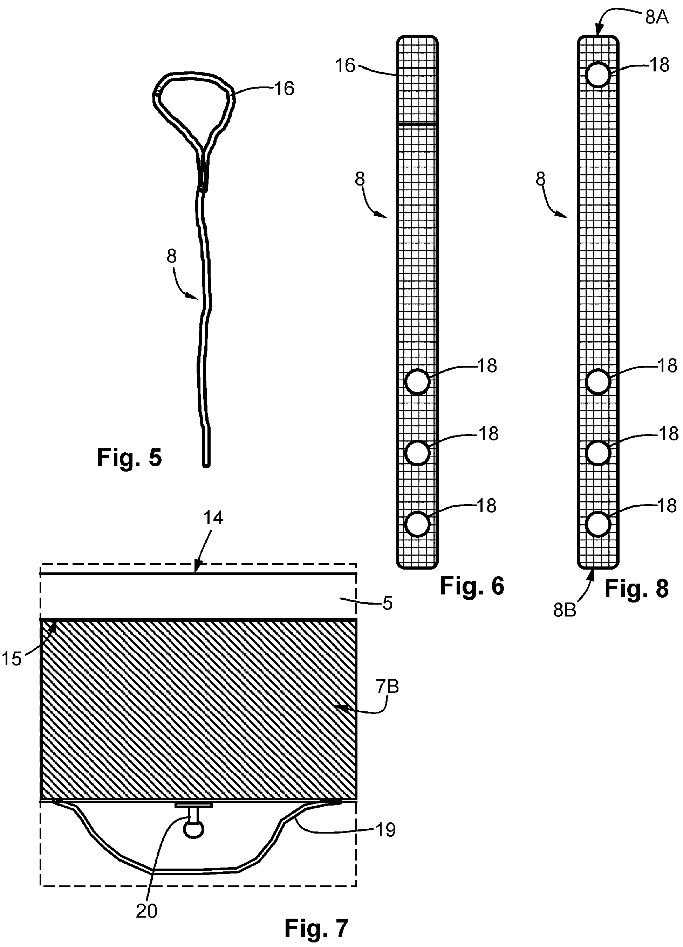

**Figur 5** zeigt eine Seitenansicht einer möglichen Ausführungsform des Sicherungselements 8. Das Sicherungselement 8 hat eine Schlaufe 16 ausgebildet, durch die das Stabilisierungselement 7A bzw. weitere Stabilisierungselement 7B greift, wenn diese in die mindestens eine Aufnahme 9A oder die mindestes eine weitere Aufnahme 9B bei der Montage des Abdecksystems 1 eingeschoben wird.

**Figur 6** zeigt eine Draufsicht auf eine Ausführungsform des Sicherungselements 8. Das Sicherungselement 8 hat gegenüber der Schlaufe 16 mehrere Ösen 18 ausgebildet, die zur Aufnahme einer Befestigung (nicht dargestellt) am abzudeckenden Objekt 2 (siehe Fig 9 bis Fig. 12) dienen.

**Figur 7** zeigt eine Detailansicht des Bereichs um den Tragegriff 19 des weiteren Stabilisierungselements 7B. Bei dem hier dargestellten Ausführungsbeispiel ist der Tragegriff 19 am weiteren und auch mittleren Stabilisierungselement 7B angebracht, das selbst an der Innenfläche 15 der Plane 5 angebracht ist. Dem Tragegriff 19 und folglich auch dem Stabilisierungselement 7B kann ein Verschlusselement 20 zugeordnet sein. In das Verschlusselement 20 kann ein Transportsicherungsband (nicht dargestellt) oder eines der Sicherungselemente 8 eingehängt bzw. befestigt werden, um die für den Transport oder die Aufbewahrung gerollte Plane 5 sicher als Rolle zu haltern.

**Figur 8** zeigt eine Draufsicht auf eine andere Ausführungsform des Sicherungselements 8. Das Sicherungselement 8 hat an einem freien Ende 8A des Sicherungselements 8 eine einzige Öse 18 ausgebildet, die zur Befestigung des Sicherungselements 8 am Stabilisierungselement 7A bzw. am weiteren Stabilisierungselement 7B dient. Am gegenüberliegenden freien Ende 8B des Sicherungselements 8 hat dieses mehrere Ösen 18 ausgebildet, die zur Befestigung (nicht dargestellt) bzw. Sicherung am abzudeckenden Objekt 2 (siehe Fig 9 bis Fig. 12) dienen.

**Figur 9** zeigt eine Seitenansicht eines Holzstoßes 203, der ein mögliches abzudeckendes Objekt 2 sein kann, das mit einer Ausführungsform des erfindungsgemäßen Abdecksystems 1 abgedeckt und geschützt ist. Der Holzstoß 203 besteht aus einer Vielzahl von aufgeschichteten Holzscheiten 11. Die Holzscheite 11, die noch nicht zu Brenn- oder Kaminholz verarbeitet sind, haben in der Regel eine Länge von circa einem Meter, und folglich beträgt die Breite des Holzstoßes 203 ebenfalls circa einen Meter. Verarbeitetes Brenn- oder Kaminholz hat eine Länge von 25 cm bis 35 cm, so dass der Holzstoß 203 eine Breite aufweist, die einem ganzzahligen Vielfachen der Länge des Brenn- oder Kaminholzes entspricht.

Die noch nicht zu Brenn- oder Kaminholz verarbeiteten Holzscheite 11 des Holzstoßes 203 werden in vorteilhafter Weise auf einer Auflage 205 aufgestapelt, damit die Holzscheite 11 nicht unmittelbar auf dem Boden liegen. Das unmittelbare Aufliegen auf dem Boden würde die Trocknung der Holzscheite 11 behindern. Auf der dem Boden abgewandten Oberseite des Holzstoßes 203 ist dieser mit einem einzigem erfindungsgemäßen Abdecksystem 1 versehen.

Das Abdecksystem 1 umfasst eine Plane 5, die vorzugsweise eine wasserundurchlässige Gewebeplane ist. Die Plane 5 weist eine Länge 5L (siehe Fig. 1) auf, die an beiden Enden 6 jeweils mit einem Stabilisierungselement 7A versehen ist. Zwischen den beiden Stabilisierungselementen 7A ist die Plane 5 mit mindestens einem weiteren Stabilisierungselement 7B verbunden, das parallel zu den Stabilisierungselementen 7A an beiden Enden 6 verläuft. Der Holzstoß 203 hat eine Länge die kleiner ist als die Länge 5L der Plane 5 des Abdecksystems 1. An beiden Enden 6 hängt die Plane 5 des Abdecksystems 1 herunter. Mit mindestens zwei Sicherungselementen 8 wird die Plane 5 des Abdecksystems 1 an den beiden Enden 6 mit jeweils einem Befestigungselement 20, an geeigneten Holzscheiten 11 des Holzstoßes 203 befestigt. Das Befestigungselement 20 kann beispielsweise eine Schraube sein, mit der die Sicherungselemente 8 der Plane 5 an einem der Holzscheite 11 des Holzstoßes 203 befestigt werden. Ebenso ist die Plane 5 am Holzstoß 203 gesichert.

**Figur 10** zeigt einen Holzstoß 203, der mit zwei Abdecksystemen 1 abgedeckt ist. Die beiden Abdecksysteme 1 sind derart auf dem Holzstoß 203 aufgelegt, dass sie an zwei Enden 6 überlappen. Zur Sicherung sind die Stabilisierungselement 7A an den zwei Enden 6 jeweils mit den Sicherungselementen 8 der Plane 5 an geeigneten Holzscheiten 11 des Holzstoßes 203 mit der in Fig. 9 beschriebenen Art und Weise befestigt. Die entsprechenden Stabilisierungselemente 7A an den Enden 6 der jeweiligen Plane 5, die herunterhängen, werden ebenso in analoger Weise zu Fig. 9 am Holzstoß 203 befestigt. Die weiteren Stabilisierungselemente 7B der Plane 5 werden ebenso in analoger Weise zu Fig. 9 mit den Sicherungselementen 8 am Holzstoß 203 befestigt.

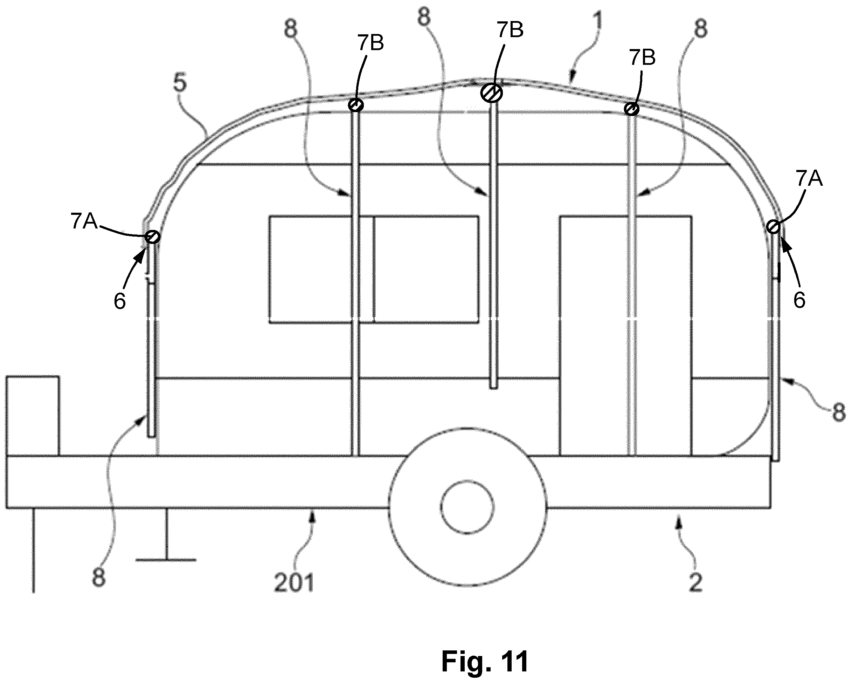

**Figur 11** zeigt eine Seitenansicht eines Wohnanhängers 201, der ein mögliches abzudeckendes Objekt 2 ist, das mit einer Ausführungsform des erfindungsgemäßen Abdecksystems 1 abgedeckt und geschützt ist. Das Abdecksystem 1 umfasst eine Plane 5, die vorzugsweise eine wasserundurchlässige Gewebeplane ist. Die Plane 5 ist an ihren beiden Enden 6 jeweils mit einem Stabilisierungselement 7A versehen. Zwischen den beiden Stabilisierungselementen 7A an den beiden Enden 6 ist die Plane 5 bei der hier dargestellten Ausführungsform mit mehreren weiteren Stabilisierungselementen 7B versehen, die parallel zur Breite der Plane 5 angeordnet sind. Die Stabilisierungselemente 7A und die weiteren Stabilisierungselemente 7B sind jeweils mit mehreren lösbaren Sicherungselementen 8 mit dem Wohnwagen 201 verbunden.

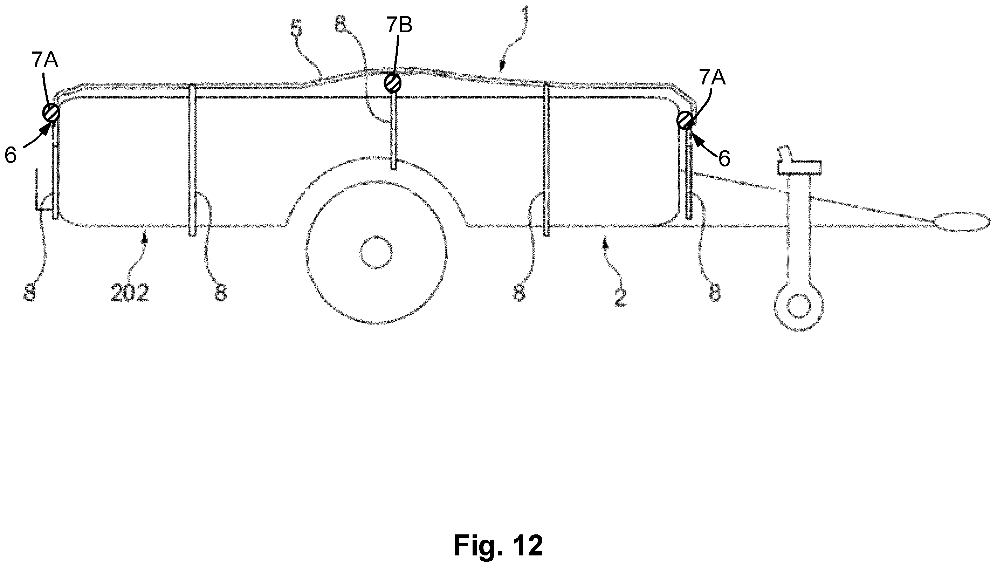

**Figur 12** zeigt eine Seitenansicht eines Anhängers 202, der ein mögliches abzudeckendes Objekt 2 sein kann, das mit einer Ausführungsform des erfindungsgemäßen Abdecksystems 1 abgedeckt und geschützt ist. Das Abdecksystem 1 für den Anhänger 202 umfasst eine Plane 5, die vorzugsweise eine wasserundurchlässige Gewebeplane ist. Die Plane 5 ist an ihren beiden Enden 6 jeweils mit einem Stabilisierungselement 7A versehen. Zwischen den beiden Stabilisierungselementen 7A ist bei dieser Ausführungsform der Plane 5 ein weiteres Stabilisierungselement 7B mit der Plane 5 verbunden, das parallel zu den Stabilisierungselementen 7A an den Enden 6 der Plane 5 verläuft. Die Stabilisierungselemente 7A bzw. die weiteren Stabilisierungselemente 7B der Plane 5 können jeweils mit Sicherungselementen 8 lösbar mit dem Anhänger 202 verbunden werden.

**Figur 13** zeigt die Plane 5 des Abdecksystems 1 (siehe Fig. 1) in einer Transportstellung gemäß einer möglichen Ausführungsform der Aufrollung der Plane 5. Bevor die Plane 5 auf den Holzstoß 203 aufgebracht bzw. von diesem abgenommen wird, ist die Plane 5 aufgerollt. Bei dieser Ausführungsform der Aufrollung wird die Plane 5 von den beiden Stabilisierungselementen 7A vom Ende 6 der Plane 5 her aufgerollt. Die Aufrollung folgt zum mittleren, weiteren Stabilisierungselement 7B der Plane 5 hin. Die gerollte Plane 5 wird mit einem Sicherungsband 23 (Transportriemen) am mittleren Stabilisierungselement 7B und einem entsprechenden Verschluss 21 gesichert. Die Plane 5 ist kompakt zusammengerollt und kann am Tragegriff 19 am mittleren Stabilisierungselement 7B getragen werden.

Es wird angenommen, dass die vorliegende Offenbarung und viele der darin erwähnten Vorteile durch die vorhergehende Beschreibung verständlich werden. Es ist offensichtlich, dass verschiedene Änderungen in Form, Konstruktion und Anordnung der Bauteile durchgeführt werden können, ohne von dem offenbarten Gegenstand abzuweichen. Die beschriebene Form ist lediglich erklärend und es ist die Absicht der beigefügten Schutzansprüche, solche Änderungen zu umfassen und einzuschließen. Dementsprechend sollte der Umfang der Erfindung nur durch die beigefügten Schutzansprüche beschränkt sein.

### BEZUGSZEICHENLISTE

- 1: Abdecksystem
- 2: Abzudeckendes Objekt
- 2B: Breite
- 5: Plane
- 5B: Breite
- 5L: Länge
- 6: Ende
- 7A: Stabilisierungselement
- 7B: weiteres Stabilisierungselement
- 8: Sicherungselement
- 8A: freies Ende
- 8B: gegenüberliegendes freies Ende
- 9A: Aufnahme
- 9B: weitere Aufnahme
- 11: Holzscheit
- 12: Freisparung
- 13: Befestigungselement
- 14: Außenfläche
- 15: Innenfläche
- 16: Schlaufe
- 18: Öse
- 19: Tragegriff
- 20: Befestigungselement
- 21: Verschluss
- 23: Sicherungsband
- 201: Wohnanhänger
- 202: Anhänger
- 203: Holzstoß
- 205: Auflage
- A: Bereich
- B: Bereich

## Patentansprüche

1. Ein Abdecksystem (1) für ein abzudeckendes Objekt (2), umfassend:
eine Plane (5), die eine Innenfläche (15) und eine Außenfläche (14) definiert;
jeweils ein Stabilisierungselement (7A), das an jedem Ende (6) der Plane (5) an der Innenfläche (15) der Plane (5) vorgesehen ist;
mindestens ein weiteres Stabilisierungselement (7B), das in der Mitte zwischen den Stabilisierungselementen (7A) an den beiden Enden (6) der Plane (5) vorgesehen ist;
mindestens eine Aufnahme (9A)für jedes Stabilisierungselement (7A) an jedem Ende (6) der Plane (5) ist mit der Innenfläche (15) der Plane (5) verbunden;
mindestens eine weitere Aufnahme (9B) für das Stabilisierungselement (7B) in der Mitte zwischen den Stabilisierungselementen (7A) an den beiden Enden (6) der Plane (5) ist mit der Innenfläche (15) der Plane (5) verbunden; und
mindestens zwei Sicherungselemente (8) sind mit jedem Stabilisierungselement (7A) und dem Stabilisierungselement (7B) in der Mitte zwischen den Stabilisierungselementen (7A) verbunden;
**gekennzeichnet durch** einen Tragegriff (19) an dem Stabilisierungselement (7B) in der Mitte zwischen den Stabilisierungselementen (7A), der derart angebracht ist, dass der Tragegriff (19) von der Innenfläche (15) der Plane (5) weggerichtet ist.

2. Das Abdecksystem (1) nach Anspruch 1, wobei die an der Innenfläche (15) der Plane (5) angebrachten Aufnahmen (9A) und die weiteren Aufnahmen (9B) aus dem gleichen Material bestehen wie die Plane (5).

3. Das Abdecksystem (1) nach einem der vorangehenden Ansprüche, wobei das Sicherungselement (8) an einem freien Ende (8A) eine Schlaufe (16) ausgebildet hat, durch die das Stabilisierungselement (7A) bzw. das weitere Stabilisierungselement (7B) greift, wenn diese in der mindestens einen Aufnahme (9) sitzen.

4. Das Abdecksystem (1) nach einem der vorangehenden Ansprüche, wobei das Sicherungselement (8) an einem freien Ende (8A) eine einzige Öse ausgebildet hat, durch die das Sicherungselement (8) am Stabilisierungselement (7A) bzw. am weiteren Stabilisierungselement (7B) befestigt ist.

5. Das Abdecksystem (1) nach Anspruch 4, wobei das Sicherungselement (8) am gegenüberliegenden freien Ende (8B) mehrere Ösen (18) ausgebildet hat, mittels der die Plane (5) am abzudeckenden Objekt (2) gesichert ist.

6. Verfahren zum Auflegen auf und Abnehmen von einem Abdecksystem (1) nach einem der vorangehenden Ansprüche, von einem abzudeckenden Objekt (2), wobei eine Plane (5) des Abdecksystems (1), eine Innenfläche (15) und eine Außenfläche (14) definiert, jeweils ein Stabilisierungselement (7A) an jedem Ende (6) der Plane (5) und ein weiteres Stabilisierungselement (7B) in der Mitte zwischen den beiden Enden (6) der Plane (5) an der Innenfläche (15) der Plane (5) vorgesehen sind und ein Tragegriff (19), der an dem weiteren Stabilisierungselement (7B) derart angebracht ist, dass er von der Innenfläche (15) der Plane (5) weggerichtet ist,
**gekennzeichnet durch die folgenden Schritte:**
• dass die zusammengerollte Plane (5) in etwa in die Mitte des abzudeckenden Objekts (2) gelegt wird, wobei der Tragegriff (19) zum abzudeckenden Objekt (2) hingerichtet ist;
• dass ein Sicherungsband (23) der zusammengerollten Plane (5) gelöst wird;
• dass die zusammengerollte Plane (5) mit dem Stabilisierungselement (7A) an jedem der Enden (6) der Plane (5) beidseitig aufgerollt wird;
• dass von den beiden Stabilisierungselementen (7A) die Plane (5) zu dem weiteren Stabilisierungselement (7B) hin zusammengerollt wird;
• dass die zusammengerollte Plane (5) gewendet wird, dass der Tragegriff (19) am weiteren Stabilisierungselement (7B) nach oben weist; und
• dass mit dem Sicherungsband (23) am mittleren Stabilisierungselement (7B) mit einem entsprechenden Verschluss (21) gesichert wird.

7. Verfahren nach Anspruch 6, wobei über Sicherungselemente (8) an jeden der Stabilisierungselemente (7A) an den zwei Enden (6) und die weiteren Stabilisierungselemente (7B) jeweils mit den Sicherungselementen (8) an dem abzudeckenden Objekt gesichert werden.

## Claims

1. A covering system (1) for an object (2) to be covered, comprising:
a tarpaulin (5) defining an inner surface (15) and an outer surface (14);
a stabilising element (7A) provided on the inner surface (15) at each end (6) of the tarpaulin (5);
at least one further stabilising element (7B) provided in the middle between the stabilising elements (7A) at both ends (6) of the tarpaulin (5);
at least one receptacle (9A) for each stabilising element (7A) at each end (6) of the tarpaulin (5) is connected to the inner surface (15) of the tarpaulin (5);
at least one further receptacle (9B) for the stabilising element (7B) in the middle between the stabilising elements (7A) at both ends (6) of the tarpaulin (5) is connected to the inner surface (15) of the tarpaulin (5); and
at least two securing elements (8) are connected to each stabilising element (7A) and to the stabilising element (7B) in the middle between the stabilising elements (7A) ;
**characterised by** a carrying handle (19) on the stabilising element (7B) in the middle between the stabilising elements (7A), which carrying handle (19) is attached in such a way that the carrying handle (19) is directed away from the inner surface (15) of the tarpaulin (5).

2. The covering system (1) according to claim 1, wherein the receptacles (9A) attached to the inner surface (15) of the tarpaulin (5) and the further receptacles (9B) are made of the same material as the tarpaulin (5).

3. The covering system (1) according to any one of the preceding claims, wherein the securing element (8) has a loop (16) formed at a free end (8A), through which the stabilising element (7A) or the further stabilising element (7B) engages when these are seated in the at least one receptacle (9).

4. The covering system (1) according to any one of the preceding claims, wherein the securing element (8) has a single eyelet formed at a free end (8A), through which the securing element (8) is attached to the stabilising element (7A) or the further stabilising element (7B).

5. The covering system (1) according to claim 4, wherein the securing element (8) has a plurality of eyelets (18) formed at the opposite free end (8B), by means of which the tarpaulin (5) is secured to the object (2) to be covered.

6. A method for placing on and removing a covering system (1) according to any one of the preceding claims from an object (2) to be covered, wherein a tarpaulin (5) of the covering system (1) defines an inner surface (15) and an outer surface (14), a stabilising element (7A) at each end (6) of the tarpaulin (5) and a further stabilising element (7B) are provided in the middle between the two ends (6) of the tarpaulin (5) on the inner surface (15) of the tarpaulin (5), and a carrying handle (19) is attached to the further stabilising element (7B) in such a way that it is directed away from the inner surface (15) of the tarpaulin (5),
**characterised by the following steps:**
• the rolled-up tarpaulin (5) is placed approximately in the centre of the object (2) to be covered, with the carrying handle (19) facing the object (2) to be covered;
• a securing strap (23) of the rolled-up tarpaulin (5) is loosened;
• the rolled-up tarpaulin (5) is rolled up on both sides with the stabilising element (7A) at each of the ends (6) of the tarpaulin (5);
• the tarpaulin (5) is rolled up from the two stabilising elements (7A) towards the further stabilising element (7B);
• the rolled-up tarpaulin (5) is turned over so that the carrying handle (19) on the further stabilising element (7B) points upwards; and
• the securing strap (23) on the middle stabilising element (7B) is secured with a corresponding fastener (21).

7. The method according to claim 6, wherein each of the stabilising elements (7A) at the two ends (6) and the further stabilising elements (7B) are secured to the object (2) to be covered by means of securing elements (8).

## Revendications

1. Un système de recouvrement (1) pour un objet à recouvrir (2), comprenant :
une bâche (5) définissant une surface intérieure (15) et une surface extérieure (14) ;
un élément de stabilisation (7A) prévu à chaque extrémité (6) de la bâche (5) sur la surface intérieure (15) ;
au moins un autre élément de stabilisation (7B) prévu au milieu entre les éléments de stabilisation (7A) aux deux extrémités (6) de la bâche (5) ;
au moins un logement (9A) pour chaque élément de stabilisation (7A) à chaque extrémité (6) de la bâche (5) est relié à la surface intérieure (15) de la bâche (5) ;
au moins un autre logement (9B) pour l'élément de stabilisation (7B) est prévu au milieu entre les éléments de stabilisation (7A) aux deux extrémités (6) de la bâche (5) et est relié à la surface intérieure (15) de la bâche (5) ; et
au moins deux éléments de fixation (8) sont reliés à chaque élément de stabilisation (7A) et à l'élément de stabilisation (7B) au milieu entre les éléments de stabilisation (7A) ;
**caractérisée par** une poignée de transport (19) sur l'élément de stabilisation (7B) au milieu entre les éléments de stabilisation (7A), qui est fixée de telle sorte que la poignée de transport (19) est orientée à l'opposé de la surface intérieure (15) de la bâche (5).

2. Le système de recouvrement (1) selon la revendication 1, dans lequel les logements (9A) fixés à la surface intérieure (15) de la bâche (5) et les autres logements (9B) sont constitués du même matériau que la bâche (5).

3. Le système de recouvrement (1) selon l'une des revendications précédentes, dans lequel l'élément de fixation (8) présente, à une extrémité libre (8A), une boucle (16) dans laquelle s'engage l'élément de stabilisation (7A) ou l'autre élément de stabilisation (7B) lorsqu'ils sont logés dans l'au moins un logement (9).

4. Le système de recouvrement (1) selon l'une des revendications précédentes, dans lequel l'élément de fixation (8) présente à une extrémité libre (8A) un seul œillet, à travers lequel l'élément de fixation (8) est fixé à l'élément de stabilisation (7A) ou à l'autre élément de stabilisation (7B).

5. Le système de recouvrement (1) selon la revendication 4, dans lequel l'élément de fixation (8) comporte, à son extrémité libre opposée (8B), plusieurs œillets (18) au moyen desquels la bâche (5) est fixée à l'objet (2) à couvrir.

6. Un procédé pour mettre en place et retirer un système de recouvrement (1) selon l'une des revendications précédentes, d'un objet (2) à couvrir ; une bâche (5) du système de recouvrement (1) définissant une surface intérieure (15) et une surface extérieure (14), un élément de stabilisation (7A) étant prévu à chaque extrémité (6) de la bâche (5) et un autre élément de stabilisation (7B) étant prévu au milieu entre les deux extrémités (6) de la bâche (5) au niveau de la surface intérieure (15) de la bâche (5), et une poignée de transport (19) étant fixée à l'autre élément de stabilisation (7B) de telle sorte qu'elle soit orientée à l'opposé de la surface intérieure (15) de la bâche (5),
**caractérisé par les étapes suivantes :**
• la bâche enroulée (5) est placée approximativement au milieu de l'objet à recouvrir (2), la poignée de transport (19) étant orientée vers l'objet à recouvrir (2) ;
• une bande de fixation (23) de la bâche enroulée (5) est détachée ;
• la bâche enroulée (5) est enroulée des deux côtés à l'aide de l'élément de stabilisation (7A) à chacune des extrémités (6) de la bâche (5) ;
• la bâche (5) est enroulée à partir des deux éléments de stabilisation (7A) vers l'autre élément de stabilisation (7B) ;
• la bâche enroulée (5) est retournée, que la poignée de transport (19) sur l'autre élément de stabilisation (7B) est orientée vers le haut ; et
• la bande de fixation (23) est fixée à l'élément de stabilisation central (7B) à l'aide d'une fermeture correspondante (21).

7. Le procédé selon la revendication 6, dans lequel chacun des éléments de stabilisation (7A) est fixé aux deux extrémités (6) à l'aide d'éléments de fixation (8) et les autres éléments de stabilisation (7B) sont fixés à l'objet (2) à recouvrir à l'aide des éléments de fixation (8).
